Europäisches Patentamt

European Patent Office

Office européen des brevets

(11) Veröffentlichungsnummer: **0 459 101 A1**

## (12) EUROPÄISCHE PATENTANMELDUNG

(21) Anmeldenummer: 91104517.7

(22) Anmeldetag: 22.03.91

(51) Int. Cl.5: **C25F 7/00**, F16C 7/00, B23H 9/14

(30) Priorität: 29.05.90 DE 4017215

(43) Veröffentlichungstag der Anmeldung:
04.12.91 Patentblatt 91/49

(84) Benannte Vertragsstaaten:
DE FR GB IT

(71) Anmelder: AEG-Elotherm GmbH
Hammesberger Strasse 31
W-5630 Remscheid-Hasten(DE)

(72) Erfinder: Stengel, Edgar
Erdelen Strasse 25
W-5630 Remscheid(DE)
Erfinder: Fey, Franz-Joseph
Reihshagener Strasse 117
W-5630 Remscheid(DE)
Erfinder: Pott, Paul-Gerhard
Am Stadtrand 49
W-5632 Wermelskirchen(DE)

(74) Vertreter: Cohausz & Florack Patentanwälte
Postfach 14 01 61 Schumannstrasse 97
W-4000 Düsseldorf 1(DE)

(54) **Vorrichtung zur elektrolytischen Entgratung von Kanten in Pleuelaugen.**

(57) Die Erfindung betrifft eine Vorrichtung zur elektrolytischen Entgratung von Pleueln 3 bestehend aus in einem Gehäuse 1 gelagerten Elektrodenhaltern 2a,2b welche jeweils einem Pleuelauge 4a,4b zugeordnete zapfenförmige Elektroden 5a,5b aufweisen, aus einer Zuleitung 6a,6b für den Elektrolyten und aus einer mit dem Pleuelkörper 3 verbindbaren weiteren Elektrode 7. Um eine leicht durchführbare und reproduzierbare Umrüstung der Vorrichtung auf Pleuel unterschiedlicher Augendurchmesser bzw. unterschiedlicher Augenabstände zu ermöglichen, ist jedem Pleuelauge 4a,4b ein mit der Zuleitung für den Elektrolyten 6a,6b verbundener in der Art eines Revolverkopfes ausgebildeter Elektrodenhalter 2a,2b zugeordnet, welcher entlang seines Umfanges mehrere Elektroden 5a,5b aufweist. Hierdurch ist es möglich, daß die dem Pleuelaugendurchmesser bzw. Pleuelaugenabstand des jeweiligen Pleuels angepaßten Elektroden durch Drehung des Revolverkopfes in die Arbeitsstellung bringbar sind.

Fig. 1

EP 0 459 101 A1

Die Erfindung betrifft eine Vorrichtung zur elektrolytischen Entgratung von Pleueln bestehend aus in einem Gehäuse gelagerten zapfenförmigen Elektroden, die jeweils einem Pleuelauge zugeordnet sind, aus einer Elektrolytzuleitung in den zu entgratenden Bereich und aus einer mit dem Pleuelkörper verbindbaren weiteren Elektrode.

Bei der Herstellung von Pleueln müssen die nach dem Bohren der Pleuelaugen entstandenen Kanten entgratet werden. Dies geschieht vorzugsweise auf elektrolytischem Wege. Hierzu ist es bekannt, Elektroden, die an das kleinere bzw. größere Pleuelauge angepaßt sind in die Pleuelaugenbohrungen einzuführen, wobei zwischen den zu entgratenden Kanten des Pleuelauges und der Außenfläche der Elektroden ein mit dem Elektolyt gefüllter Arbeitsspalt entsteht. In dem Bereich, der nicht bearbeitet werden soll, ist die Elektrode isoliert. Diese Isolation dient gleichzeitig als Positionierung. Die Elektrode ist mit dem Minus-Potential und das Pleuel ist mit dem Plus-Potential der Leistungseinheit verbunden, wobei die Verbindung mittels eines Schleifringkontaktes erfolgt.

Um ein gezieltes Entgraten dieser Kanten zu erreichen, ist eine aufwendige Positionierung des Werkstücks auf den Zapfen erforderlich.

Dies ist solange vergleichsweise unproblematisch, solange die Pleuel gleichen Typs sind, d.h. gleichen Durchmesser im größeren bzw. kleineren Pleuelauge und gleichen Abstand der Pleuelaugen aufweisen.

Ändern sich jedoch die Abmessungen des zu bearbeitenden Pleuels, so ist die jeweilige Umrüstung der Entgratvorrichtung sehr zeitaufwendig. Das ist besonders nachteilig, wenn eine gesamte Fertigungsstraße für Pleuel auf einen anderen Werkstücktyp umgerüstet werden soll.

Demgegenüber liegt der Erfindung die Aufgabe zugrunde, eine Vorrichtung zur elektrolytischen Entgratung von Kanten in Pleuelaugen derart weiterzuentwickeln, daß sie leicht umrüstbar ist, wenn sich Bohrungsdurchmesser bzw. Augenabstand des zu bearbeitenden Pleuels ändern.

Diese Aufgabe wird erfindungsgemäß dadurch gelöst, daß jedem Pleuelauge ein eine Elektrolytzuleitung aufweisender in der Art eines Revolverkopfes ausgebildeter Elektrodenhalter für mehrere entlang seines Umfangs angeordnete zapfenförmige Elektroden derart zugeordnet ist, daß die für die Bearbeitung der jeweiligen Pleuelaugendurchmesser bzw. Pleuelaugenabstand vorausgewählten Elektroden durch Drehung des Revolverkopfes in die Arbeitsstellung bringbar sind.

Die Erfindung zeichnet sich dadurch aus, daß für unterschiedliche zu bearbeitende Pleuel durch Drehung der revolverartigen Elektrodenhalter die jeweils geeignete Kombination der als Elektroden dienenden Zapfen aus den zur Verfügung stehenden Zapfen ausgewählt und in die Arbeitsstellung gebracht werden kann. Durch die separate Ausbildung der Elektrodenhalter für das große bzw. kleine Pleuelauge ist eine große Variationsmöglichkeit sowohl für den Augendurchmesser als auch den Abstand der Pleuelaugen zueinander möglich. Die Genauigkeit der Justierung ist dabei sehr hoch, da jeder der ausgewählten Zapfen durch Drehung des revolverartigen Halters reproduzierbar positioniert werden kann.

Eine einfache Ausgestaltung ergibt sich, wenn der Elektrodenhalter quaderförmig ausgebildet ist und mittels einer Stelleinrichtung um die sich in seiner Längsachse erstreckende rohrfömige Zuleitung für den Elektrolyten in die Arbeitsposition für die vorausgewählte Elektrodenstellung drehbar ist.

Diese Ausführungsform besteht aus einem feststehenden Teil, durch den der Elektrolyt zuführbar ist und einem ihm gegenüber drehbarem Teil, auf dem sich die als Elektroden dienenden Zapfen befinden. Der hierdurch entstehende Aufbau ist einerseits kompakt und ermöglich andererseits eine einfache Elektrolytzufuhr. Das Minus-Potential wird über einen Schleifring-Kontakt übertragen.

Wenn in einer weiteren besonderen Ausgestaltung die rohrförmige Zuleitung des quaderfömigen Elektrodenhalter in dem wannenförmigen Gehäuse gelagert ist, können der vorhandene Grundkörper der elektrochemischen Bearbeitungseinheit und seine wesentlichen Komponenten, beispielsweise die mit dem Gehäuse verbundene Minus-Elektrode erhalten bleiben.

Als Positioniermittel für die Auswahl der jeweiligen zapfenförmigen Elektroden eignen sich zum einen eine manuell betätigtbare Indexscheibe oder aber auch eine automatische Stelleinrichtung mittels eines elektrisch betätigbaren Stellmotors. Letztere Lösung hat besondere Vorteile bei der vollautomatischen Bearbeitung von Pleueln im Falle eines Typenwechsels.

Wenn jedem der auf der Quaderaußenfläche angeordneten zapfenförmigen Elektroden eine sich einwärts erstreckende Sackbohrung zugeordnet ist und daß die rohrförmige Zuleitung für den Elektrolyten axial versetzt in jeder Revolverebene jeweils einen Querdurchbruch aufweist, durch den die der ausgewählten Elektrode zugeordnete Sackbohrung mit der Elektrolytzufuhr verbindbar ist, ergibt sich eine konstruktiv einfache Lösung, die beinhaltet, daß immer nur der jeweils aktive, d.h. zur Entgratung verwendete Zapfen mit Elektrolyt versorgt wird, wohingegen die übrigen Zapfen von der Elektrolytversorgung entkoppelt sind.

Dadurch, daß jeder der Elektrodenhalter auch mehrere axial versetzte Gruppen von revolverkopfartig angeordneten Elektroden aufweisen kann, lassen sich mehrere Pleuel parallel bearbeiten.

Vorzugsweise wird das Plus-Potential über die weitere Elektrode mittels einer drehbar am Gehäuse angebrachten Deckelstücks auf den Pleuelkörper gesenkt. Außerdem wird die Bearbeitungseinheit für den Umrüstvorgang leicht zugänglich. Hierdurch wird das Pleuel mit dem Plus-Potential der Leistungseinheit verbunden. Außerdem ist diese drehbare Einrichtung für die Be- und Entladung durch ein Transportsystem (oder manuell) notwendig.

Die Erfindung wird im folgenden anhand einer ein Ausführungsbeispiel darstellenden Zeichnung näher erläutert.

Dabei zeigen:

Fig.1     eine perspektivische Ansicht eines Ausführungsbeispieles der Erfindung,

Fig.2a     einen Schnitt entlang der Linie AA in Fig.1 und

Fig.2b     einen Schnitt entlang der Linie BB in Fig.2a.

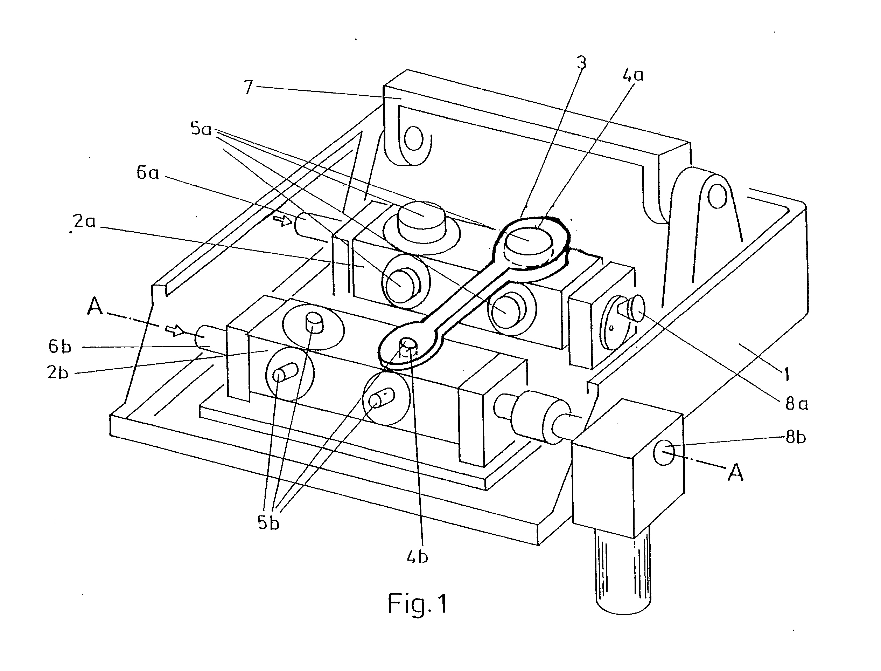

Figur 1 zeigt die in einem wannenförmigen Gehäuse 1 gelagerte Anordnung zum elektrolytischen Entgraten von Kanten in Pleuelaugen. Innerhalb des wannenförmigen Gehäuses 1 sind zwei sich parallel erstreckende mit Abstand zueinander angeordnete quaderförmige Elektrodenhalter 2a,2b vorgesehen.

Die Elektrodenhalter 2a,2b weisen an ihren Enden in der Wand des wannenförmigen Gehäuses 1 gelagerte Rohrstücke 6a,6b, auf, die jeweils an eine Quelle für einen Elektrolyten angeschlossen sind. Im Zwischenbereich sind die Elektrodenhalter 2a,2b quaderförmig ausgebildet.

Die quaderförmigen Haltemittel 2a,2b sind drehbar auf den ihnen zugeordneten rohrförmigen Zuleitungen 6a,6b gelagert. Durch die Stromzufuhr über Schleifring-Kontakt 11, bleibt die Verbindung mit dem Minus-Potential in jeder Position erhalten. Die Drehung erfolgt dabei durch die Stellwirkung eines mechanischen Getriebes 8a oder eines elektrischen Stellmotors 8b.

Auf den vier Außenflächen der quaderförmigen Elektrodenhalter 2a,2b befinden sich zapfenförmige Elektroden, die als Werkzeuge für die Entgratung von Kanten in den jeweiligen Pleuelaugen 4a,4b eines zu bearbeitenden Pleuels 3 dienen. Die Zapfen sind auf dem Umfang des Elektrodenhalters versetzt angeordnet, liegen aber in der Achsnormalebene des quaderförmigen Elektrodenhalters, so daß durch dessen Drehung in der Art eines Revolverkopfes die gewünschte Elektrode in die Arbeitsstellung gebracht werden kann.

Jeweils ein Pleuelauge ist dem einen Elektrodenhalter 2a bzw. dem anderen Elektrodenhalter 2b zugeordnet. Die dargestellte Vorrichtung ermöglicht somit die parallele Bearbeitung von zwei Pleueln, wobei das zweite Pleuel parallel zu dem eingezeichneten Pleuel 3 angeordnet wird.

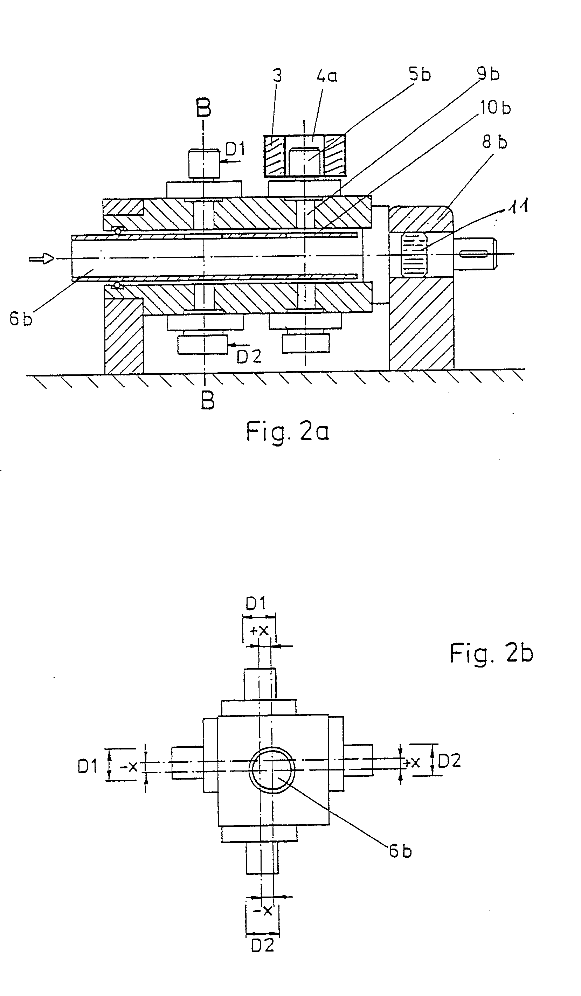

Die auf den Außenflächen der jeweiligen quaderförmigen Elektrodenhalter 2a,2b angeordneten Zapfen können zum einen, wie in Fig. 2b dargestellt ist, unterschiedliche Durchmesser $D_1$, $D_2$ aufweisen, so daß entsprechend unterschiedliche Pleuelaugendurchmesser bearbeitet werden können. Zum anderen können die Zapfen zur Berücksichtigung eines unterschiedlichen Augenabstandes der einzelnen zu bearbeitenden Pleuel um einen bestimmten Weg x in Bezug auf einen mittleren Pleuelabstand versetzt sein. Dies ist durch die Auslenkungen x gegenüber der Mittellage in der Fig.2b dargestellt.

Die Lage und der Durchmesser der Zapfen wird bei der Herstellung der jeweiligen quaderförmigen Elektrodenhalters 2a,2b unter Berücksichtigung der unterschiedlichen zu bearbeitenden Pleuel festgelegt. Durch die Auswahl des jeweiligen Zapfens auf dem einen Elektrodenhalter 2a bzw. dem anderen Elektrodenhalter 2b ist eine Vielzahl von Kombinationen von Pleuelaugendurchmessern bzw. Pleuelaugenabständen einstellbar.

Wie aus Fig. 2a hervorgeht, erstreckt sich unterhalb einer jeden zapfenförmigen Elektrode 5b eine einwärts in den Quaderraum führende Sackbohrung 9b, die als Zuleitungskanal für den Elektrolyten dienen kann. Axial versetzt entlang der rohrförmigen Zuleitung 6b für den Elektrolyten sind Querbohrungen 10b im Rohrmantel vorgesehen.

Diese Querbohrungen befinden sich auf der Gehäuseoberseite. Dadurch wird gewährleistet, daß nur diejenige Sackbohrung 9b mit der Elektrolytzuleitung 6b verbunden wird, welche nach oben gerichtet ist, d.h., welche auch zur Entgratung des jeweiligen Pleuelauges ausgewählt ist. Die anderen Sackbohrungen, beispielsweise die in Fig.2a dargestellten nach unten gerichteten Sackbohrungen sind von der Zuführung des Elektrolyten 6b abgekoppelt.

Für die Durchführung des Entgratungsvorganges wird der Minuspol der Spannungsversorgungseinheit an das wannenförmige Gehäuse 1 angelegt, während der Pluspol über einen schwenkbaren Deckel 7 auf den Pleuelkörper 3 abgesenkt wird, so daß der Elektrolyt im Arbeitsspalt zwischen zapfenförmiger Elektrode und Innenbohrung des jeweiligen Pleuelauges aktiviert wird.

Nach der Bearbeitung und zum Zwecke der Umrüstung auf ein Pleuel mit anderen Augendurchmessern bzw. Augenabständen wird das bearbeitete Pleuel der Vorrichtung entnommen und anschließend die quaderförmigen Elektrodenhalter 2a,2b so mittels der Stelleinrichtungen 8a,8b in der Art eines Revolverkopfes um ihre Achse gedreht, daß die gewünschten Zapfen, die den Dimensionen des neu zu bearbeitenden Pleuels entsprechen auf der von oben zugänglichen Seite der Bearbeitungseinheit angeordnet sind. Sodann wird das zu bearbeitende neue Pleuel eingelegt und wie beschrieben verfahren.

## Patentansprüche

1. Vorrichtung zur elektrolytischen Entgratung von Pleueln bestehend aus in einem Gehäuse (1) gelagerten zapfenförmigen Elektroden (5a,5b), die jeweils einem Pleuelauge (4a,4b) zugeordnet sind, aus einer Elektrolytzuleitung (6a,6b) in den zu entgratenden Bereich und aus einer mit dem Pleuelkörper (3) verbindbaren weiteren Elektrode (7),
   **dadurch gekennzeichnet,** daß jedem Pleuelauge (4a,4b) ein eine Elektrolytzuleitung (6a,6b) aufweisender in der Art eines Revolverkopfes ausgebildeter Elektrodenhalter (2a,2b) für mehrere entlang seines Umfangs angeordnete zapfenförmige Elektroden (5a,5b) derart zugeordnet ist, daß die für die Bearbeitung der jeweiligen Pleuelaugendurchmesser $(D_1,D_2)$ bzw. Pleuelaugenabstand vorausgewählten Elektroden (5a,5a) durch Drehung des Revolverkopfes in die Arbeitsstellung bringbar sind.

2. Vorrichtung nach Anspruch 1,
   **dadurch gekennzeichnet,** daß der Elektrodenhalter (2a,2b) quaderförmig ausgebildet ist und mittels einer Stelleinrichtung (8a,8b) um die sich in seiner Längsachse erstreckende rohrförmige Zuleitung (6a,6b) für den Elektrolyten in die Arbeitsposition für die vorausgewählte Elektrodenstellung drehbar ist.

3. Vorrichtung nach Anspruch 1 oder 2,
   **dadurch gekennzeichnet,** daß die rohrförmige Zuleitung (6a,6b) des quaderförmigen Elektrodenhalters (2a,2b) in einem wannenförmigen Gehäuse (1) gelagert ist.

4. Vorrichtung nach einem der Ansprüche 1 bis 3,
   **dadurch gekennzeichnet,** daß das Positioniermittel eine manuell betätigte Indexscheibe (8a) ist.

5. Vorrichtung nach einem der Ansprüche 1 bis 3,
   **dadurch gekennzeichnet,** daß das Positioniermittel eine elektrisch betätigter Stellmotor (8b) ist.

6. Vorrichtung nach einem der Ansprüche 1 bis 5,
   **dadurch gekennzeichnet,** daß jedem der auf der Quaderaußenfläche angeordneten zapfenförmigen Elektroden (5a,5b) eine sich einwärts erstreckende Sackbohrung (9b) zugeordnet ist und daß die rohrförmige Zuleitung (6b) für den Elektrolyten axial versetzt in jeder Revolverebene jeweils einen Querdurchbruch aufweist, durch den die der ausgewählten Elektrode (5a,5b) zugeordnete Sackbohrung (9b) mit der Elektrolytzufuhr verbindbar ist.

7. Vorrichtung nach einem der Ansprüche 1 bis 6,
   **dadurch gekennzeichnet,** daß der Elektrodenhalter (2a,2b) eine oder mehrere axial versetzte Gruppen von revolverkopfartig angeordneten Elektroden aufweist.

8. Vorrichtung nach einem der Ansprüche 1 bis 7,
   **dadurch gekennzeichnet,** daß die weitere Elektrode mittels eines drehbar am Gehäuse angebrachten Deckelstücks (7) auf den Pleuelkörper (3) absenkbar ist.

Fig. 1

EP 0 459 101 A1

Fig. 2a

Fig. 2b

**Europäisches Patentamt**

# EUROPÄISCHER RECHERCHENBERICHT

Nummer der Anmeldung

**EP 91 10 4517**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 405 430 (HANULIK)<br>– – – | | C 25 F 7/00<br>F 16 C 7/00<br>B 23 H 9/14 |
| A | PATENT ABSTRACTS OF JAPAN, Band 9, Nr. 4 (C-267)[1764], 21. Februar 1985;<br>& JP-A-59 182 999 (SHI KEE DEI K.K.) 17-10-1985<br>– – – | | |
| A | PATENT ABSTRACTS OF JAPAN, Band 6, Nr. 68 (C-100)[946], 30. April 1982;<br>& JP-A-57 5899 (TOKYO SHIBAURA DENKI K.K.) 12-01-1982<br>– – – – – | | |

| RECHERCHIERTE SACHGEBIETE (Int. Cl.5) |
|---|
| C 25 F 7/00<br>C 25 F 3/14<br>B 23 H 9/14<br>B 23 H 9/16<br>F 16 C 7/00 |

Der vorliegende Recherchenbericht wurde für alle Patentansprüche erstellt

| Recherchenort | Abschlußdatum der Recherche | Prüfer |
|---|---|---|
| Den Haag | 27 Juni 91 | VAN LEEUWEN R.H. |